# EUROPEAN PATENT SPECIFICATION

(11) **EP 3 199 342 B1**
(45) Date of publication and mention of the grant of the patent: **27.02.2019**
(21) Application number: 16382033.5
(22) Date of filing: 29.01.2016
(51) Int. Cl.: B32B 27/32, C08J 5/18, C08L 23/06

(54) **FILMS, AND RELATED COMPOSITIONS AND METHODS OF MAKING**
FILME UND VERWANDTE ZUSAMMENSETZUNGEN UND VERFAHREN ZUR HERSTELLUNG
FILMS ET COMPOSITIONS APPARENTÉES ET PROCÉDÉS DE FABRICATION

(43) Date of publication of application: 02.08.2017
(73) Proprietor: Dow Global Technologies LLC, Midland, MI 48674 (US)
(72) Inventor: NIETO, Jesús, 43080 Tarragona (ES); LLOP, Cosme, 43080 Tarragona (ES); MANRIQUE, Antonio, 43080 Tarragona (ES)
(74) Representative: Elzaburu S.L.P.

(56) References cited:
- EP-A1- 1 152 025
- EP-A1- 2 216 366
- EP-A2- 2 002 963
- EP-A2- 2 554 377

## Description

### FIELD

Embodiments of the present disclosure relate to monolayer and multilayer stretch wrap films that include polyethylene, and more particularly, to monolayer and multilayer stretch wrap films that include polyethylene that include a nonpolar, polyethylene wax, and related compositions and methods of making.

### BACKGROUND

Stretch wrap films such as silage wrap films can be used to wrap silage so as to limit the exposure of the silage to air so that the silage can undergo anaerobic fermentation for a desirable amount of time. Because silage can be a rough material to handle, the baled silage can be stored outside in a wide variety of weather conditions, and the baled silage can be handled by heavy equipment, it can be desirable for silage wrap to have highly durable mechanical properties to withstand such conditions while at the same time providing desirable oxygen barrier properties. Unfortunately, material properties that can enhance oxygen barrier properties may degrade mechanical properties.

EP2216366 A1 discloses laminating resin compositions that enable higher productivity in the lamination processes and are free from deterioration in optical characteristics.

EP2002963 A2 discloses a process for producing a film by a stretch molding using a raw material that comprises a polyethylene or a polypropylene.

Accordingly, alternative stretch wrap films having improved oxygen barrier properties while at the same time having durable mechanical properties to contain silage in a wide variety of environmental conditions is desirable.

### SUMMARY

Disclosed in embodiments herein are monolayer or multilayer films. The films include at least one layer as defined in claim 1.

Also disclosed in embodiments herein are compositions as defined in claim 11.

Also disclosed in embodiments herein are methods of making a film as defined in claim 13. The methods further include forming the melted blend into a film via cast film techniques or blown film techniques.

### DETAILED DESCRIPTION

Reference will now be made in detail to films, compositions, and methods thereof according to the present disclosure. The films may be used as stretch wrap in wrapping silage to allow anaerobic fermentation to occur for a desirable amount of time. It is noted, however, that this is merely an illustrative implementation of the embodiments disclosed herein. The embodiments are applicable to other technologies that are susceptible to similar problems as those discussed herein. For example, the films described herein may be used in other flexible packaging applications, such as, heavy duty shipping sacks, liners, sacks, stand-up pouches, detergent pouches, sachets, etc., all of which are within the purview of the present embodiments.

General film structure and composition film can be monolayer film or multi-layer film.

### A - Polyethylene Polymer Component

The polyethylene polymer component can be selected to help provide, e.g., desirable properties in the film so that the film can be used as a stretch wrap such as silage wrap (discussed in section "F" below).

The polyethylene polymer component may include one or more polyethylene polymers in an amount such that the film includes from greater than 50 wt.% to 95 wt.% of one or more polyethylene polymers based on the total weight of the film. All individual values and subranges are included and disclosed herein. For example, in some embodiments, a film can have from 55 wt.% to 95 wt.% of one or more polyethylene polymers based on the total weight of the film, from 60 wt.% to 95 wt.% of one or more polyethylene polymers based on the total weight of the film, or from 65 wt.% to 95 wt.% of one or more polyethylene polymers based on the total weight of the film. In other embodiments, a film can have from 55 wt.% to 90 wt.% of one or more polyethylene polymers based on the total weight of the film, from 60 wt.% to 85 wt.% of one or more polyethylene polymers based on the total weight of the film, or from 60 wt.% to 70 wt.% of one or more polyethylene polymers based on the total weight of the film.

In some embodiments, a film includes only the polyethylene polymer component and the nonpolar, polyethylene wax component (discussed below), where the polyethylene polymer component is present in an amount of 97 wt.% or less based on the total weight of the film and the nonpolar, polyethylene wax component is present in an amount of 3 wt.% or more based on the total weight of the film.

### A.1 - Linear Low Density Polyethylene (LLDPE)

The polyethylene polymer component may include at least linear low density polyethylene. The linear low density polyethylene may include, in polymerized form, a majority weight percent of ethylene based on the total weight of the linear low density polyethylene. In an embodiment, the linear low density polyethylene is an interpolymer of ethylene and at least one ethylenically unsaturated comonomer. In one embodiment, the comonomer can be a C₃-C₂₀ α-olefin. In another embodiment, the comonomer is a C₃-C₈ α-olefin. In another embodiment, the C₃-C₈ α-olefin can be selected from propylene, 1- butene, 1-hexene, or 1-octene. In an embodiment, the linear low density polyethylene can be selected from the following copolymers: ethylene/propylene copolymer, ethylene/butene copolymer, ethylene/hexene copolymer, and ethylene/octene copolymer. In a further embodiment, the linear low density polyethylene is an ethylene/octene copolymer.

The linear low density polyethylene may have a density of from 0.890 g/cc to 0.940 g/cc. All individual values and subranges are included and disclosed herein. For example, in some embodiments, the linear low density polyethylene may have a density of from 0.890 g/cc to 0.935 g/cc, 0.890 g/cc to 0.930 g/cc, or 0.900 g/cc to 0.930 g/cc. In other embodiments, the linear low density polyethylene may have a density of from 0.905 g/cc to 0.940 g/cc, 0.910 g/cc to 0.940 g/cc, or 0.915 g/cc to 0.940 g/cc.

The linear low density polyethylene may have a melt index, or I₂, of from 0.1 g/10 min to 10 g/10 min. All individual values and subranges are included and disclosed herein. For example, in some embodiments, the linear low density polyethylene may have a melt index (I₂) from 0.1 to 6 g/10 min, 0.1 to 5 g/10 min, 0.1 to 4 g/10 min, 0.1 g/10 min to 3.5 g/10 min, 0.1 g/10 min to 2 g/10 min, 0.1 g/10 min to 1.5 g/10 min. In other embodiments, the linear low density polyethylene may have a melt index (I₂) from 0.1 g/10 min to 1.1 g/10 min. In further embodiments, the linear low density polyethylene may have a melt index (I₂) of 0.2-0.9 g/10 min.

The linear low density polyethylene can be made by a variety of techniques. For example, the linear low density polyethylene may be produced via a gas phase or a solution phase and using single-site catalysts techniques and/or Ziegler-Natta catalyst techniques. Methods for producing olefin polymers using single site catalysts can be U.S. Pat. No. 5,272,236 (Lai et al.), 5,324,800 (Welborn , Jr. et al.), and U.S. Pat. No. 6,486,284 (Karande et al.), the entirety of which patents are incorporated herein by reference. Single-site catalyst systems may include metallocene catalysts and post-metallocene catalysts. Ziegler-Natta catalysts are described in U.S. Publication Numbers 2008/0038571(Klitzmiller et al.) and 2008/0176981 (Biscoglio et al.), the entirety of which patent documents are incorporated herein by reference.

In one embodiment, the linear low density polyethylene can be a Ziegler-Natta catalyzed ethylene and octene copolymer. The linear low density polyethylene can have crystallinity from about 40% to about 50%, or about 47%.

In another embodiment, the linear low density polyethylene can be a single-site catalyzed linear low density polyethylene ("sLLDPE").

As used herein, "sLLDPE" is a LLDPE polymerized using a single site catalyst such as a metallocene catalyst or a constrained geometry catalyst. A "metallocene catalyst" is a catalyst composition containing one or more substituted or unsubstituted cyclopentadienyl moiety in combination with a Group 4, 5, or 6 transition metal. A "constrained geometry catalyst" comprises a metal coordination complex comprising a metal of groups 3-10 or the Lanthanide series of the Periodic Table and a delocalized pi-bonded moiety substituted with a constrain-inducing moiety, said complex having a constrained geometry about the metal atom such that the angle at the metal between the centroid of the delocalized, substituted pi-bonded moiety and the center of at least one remaining substituent is less than such angle in a similar complex containing a similar pi-bonded moiety lacking in such constrain-inducing substituent, and provided further that for such complexes comprising more than one delocalized, substituted pi-bonded moiety, only one thereof for each metal atom of the complex is a cyclic, delocalized, substituted pi-bonded moiety. The constrained geometry catalyst further comprises an activating co-catalyst. Nonlimiting examples of suitable constrained geometry catalysts are disclosed U.S. Pat. No. 5,132,380 (Mullins et al.), the entire content of which is incorporated by reference herein.

The sLLDPE, may be unimodal or multimodal (i.e., bimodal). A "unimodal sLLDPE" is a LLDPE polymer prepared from one single-site catalyst under one set of polymerization conditions. A "multimodal sLLDPE is an LLDPE polymer prepared from two or more different catalysts and/or under two or more different polymerization conditions. A "multimodal sLLDPE" comprises at least a lower molecular weight component (LMW) and a higher molecular weight (HMW) component. Each component is prepared with a different catalyst and/or under different polymerization conditions. The prefix "multi" relates to the number of different polymer components present in the polymer. A nonlimiting example of multimodal sLLDPE is set forth in U.S. Patent No. 5,047,468 (Lee et al.), the entire content of which is incorporated by reference herein.

The LLDPE can be present in an amount of from greater than 50 wt.% to 95 wt.% based on the total weight of the film. All individual values and subranges are included and disclosed herein. For example, in some embodiments, a film can have from 55 wt.% to 95 wt.% of LLDPE based on the total weight of the film, from 60 wt.% to 95 wt.% of LLDPE based on the total weight of the film, or from 65 wt.% to 95 wt.% of LLDPE based on the total weight of the film. In other embodiments, a film can have from 55 wt.% to 90 wt.% of LLDPE based on the total weight of the film, from 60 wt.% to 85 wt.% of LLDPE based on the total weight of the film, or from 60 wt.% to 65 wt.% of LLDPE based on the total weight of the film.

Nonlimiting examples of suitable and commercially available linear low density polyethylene are LLDPE sold under the tradenames DOWLEX™ 2045 S, DOWLEX™ SL2103G, and ELITE™ AT 6301, available from The Dow Chemical Company, Midland, Michigan.

In some embodiments, the polyethylene component includes only LLDPE.

### A.2 - Optional Polyethylene Polymers

Optionally, in some embodiments, the polyethylene component includes a blend of LLDPE with one or more additional polyethylene polymers chosen from the group of ultra-high-molecular-weight polyethylene (UHMWPE), high-density polyethylene (HDPE), medium-density polyethylene (MDPE), low-density polyethylene (LDPE), very low-density polyethylene (VLDPE), and ultra-low-density polyethylene (ULDPE). In some embodiments, the polyethylene component includes a blend of linear low density polyethylene and at least one polyethylene polymer chosen from low density polyethylene, medium density polyethylene, and high density polyethylene.

The one or more additional polyethylene polymers can be present in an amount of from greater than 0.5 wt.% to 50 wt.% based on the total weight of the film. All individual values and subranges are included and disclosed herein. For example, in some embodiments, a film can have from 5 wt.% to 40 wt.% of one or more additional polyethylene polymers based on the total weight of the film, or from 10 wt.% to 20 wt.% of one or more additional polyethylene polymers based on the total weight of the film. In other embodiments, a film can have from 0.5 wt.% to 15 wt.% of one or more additional polyethylene polymers based on the total weight of the film, or from 0.5 wt.% to 10 wt.% of one or more additional polyethylene polymers based on the total weight of the film.

A nonlimiting example a of suitable and commercially available ULDPE is ULDPE sold under the tradename ATTANE™, available from The Dow Chemical Company, Midland, Michigan.

### B - Optional Polymer Component

The polyethylene polymer component can optionally be blended with one more polymers in addition to polyethylene polymers. Exemplary optional polymers include propylene-based polymers, ethylene-vinyl acetate (EVA) copolymers, ethylene vinyl alcohol (EVOH) copolymers, and other polymers useful in forming mechanically tough oxygen barriers such as silage wrap.

The one or more optional polymers can be present in an amount of from greater than 0.5 wt.% to 50 wt.% based on the total weight of the film. All individual values and subranges are included and disclosed herein. For example, in some embodiments, a film can have from 5 wt.% to 40 wt.% of one or more optional polymers based on the total weight of the film, or from 10 wt.% to 20 wt.% of one or more optional polymers based on the total weight of the film.

### C - Wax Component

The wax component according to the present disclosure can include one or more waxes to help decrease oxygen transmission rate of the film while at the same time not negatively impacting the mechanical properties of the film to an undue degree (e.g., so that the film can be used to wrap silage without tearing and the like to an undue degree). It has been discovered that a film including at least one nonpolar, polyethylene wax having a density of 0.955 grams/cm³ or greater, and in an amount of at least 3 percent by weight of the film can unexpectedly provide a significant reduction in stretched oxygen transmission rate (e.g., stretched OTR) while at the same time providing film mechanical properties that are sufficient for the film to be used as a silage wrap. This finding is unexpected because, without being bound by theory, it is believed that as the crystallinity of a polymer used in a film increases, the stretched oxygen transmission rate of the film tends to decrease, but the mechanical properties of the film tend to degrade to an undue degree, especially in the context of a silage wrap.

As used herein, "nonpolar" refers to a polyethylene wax that has an acid value of no more than 5 (mg KOH/g). In some embodiments, the nonpolar, polyethylene wax may have an acid value of from 0 to 5 (mg KOH/g). All individual values and subranges are included and disclosed herein. For example, in some embodiments, the nonpolar, polyethylene wax may have an acid value of from 0 to 4, 0 to 3, 0 to 2, or 0 to 1 (mg KOH/g). In some embodiments, a nonpolar, polyethylene wax does not include any polar functional groups.

The nonpolar, polyethylene wax may have a saponification value of no more than 5 (mg KOH/g). In some embodiments, the nonpolar, polyethylene wax may have a saponification value of from 0 to 5 (mg KOH/g). All individual values and subranges are included and disclosed herein. For example, in some embodiments, the nonpolar, polyethylene wax may have a saponification value of from 0 to 4, 0 to 3, 0 to 2, or 0 to 1 (mg KOH/g).

As used herein, "polyethylene wax" refers to both ethylene homopolymers and copolymers of ethylene with α-olefins having a chain length of C₃ -C₁₈. Nonpolar polyethylene waxes according to the present disclosure can be made by polymerizing ethylene to produce a relatively high density polyethylene wax having properties as described herein below. Nonpolar, polyethylene wax can be prepared by thermal degradation of branched or unbranched polyethylene polymers or by direct polymerization of ethylene. Examples of suitable polymerization processes include free-radical processes, in which ethylene is reacted under high pressures and temperatures to form a wax with a greater or lesser degree of branching, and also processes in which ethylene and/or higher 1-olefins are polymerized to branched or unbranched waxes using organometallic catalysts, such as Ziegler-Natta or metallocene catalysts, for example. Corresponding methods of preparing olefin homopolymer and copolymer waxes are described for example in U.S. Pat. No. 8,765,848 (Fell et al.), the entirety of which patent is incorporated herein by reference.

The nonpolar, polyethylene wax may have a density of 0.955 g/cc or greater, or even 0.965 g/cc or greater. In some embodiments, the nonpolar, polyethylene wax may have a density of from 0.955 g/cc to 0.995 g/cc. All individual values and subranges are included and disclosed herein. For example, in some embodiments, the nonpolar, polyethylene wax may have a density may have a density of from 0.955 g/cc to 0.990 g/cc, 0.955 g/cc to 0.980 g/cc, or 0.955 g/cc to 0.975 g/cc. In other embodiments, the linear low density polyethylene may have a density of from 0.960 g/cc to 0.995 g/cc, 0.965 g/cc to 0.990 g/cc, or 0.970 g/cc to 0.985 g/cc.

The nonpolar, polyethylene wax may have a viscosity of from 100 (mPa-s) to 30,000 (mPa-s). All individual values and subranges are included and disclosed herein. For example, in some embodiments, the nonpolar, polyethylene wax may have a viscosity of from 100 (mPa-s) to 600 (mPa-s), 100 (mPa-s) to 400 (mPa-s), or 300 (mPa-s) to 400 (mPa-s). In other embodiments, the nonpolar, polyethylene wax may have a viscosity of from 20,000 (mPa-s) to 30,000 (mPa-s), 20,000 (mPa-s) to 28,000 (mPa-s), or 22,000 (mPa-s) to 27,000 (mPa-s).

The nonpolar, polyethylene wax may have a drop point of from 125°C to 145°C. All individual values and subranges are included and disclosed herein. For example, in some embodiments, the nonpolar, polyethylene wax may have a drop point of from 125°C to 140°C, 125°C to 135°C, or 125°C to 130°C. In other embodiments, the nonpolar, polyethylene wax may have a drop point of from 130°C to 145°C, 135°C to 145°C, or 140°C to 145°C.

The film has from 10 wt.% to 30 wt.% of nonpolar, polyethylene wax based on the total weight of the film, or from 15 wt.% to 30 wt.% of nonpolar, polyethylene wax based on the total weight of the film.

Nonlimiting examples of suitable and commercially available nonpolar, polyethylene waxes are nonpolar, polyethylene wax sold under the tradenames LICOWAX® 130 or LICOWAX® 190 from Clariant International Ltd., Muttenz, Switzerland.

### D - Optional Additives

One or more layers of a film disclosed herein may further include one or more additives. Additives can be individually present in an amount of up to about 2% based on the total weight of the polyethylene-based film. Such additives include, but are not limited to, antistatic agents, color enhancers, dyes, lubricants, fillers, pigments, primary antioxidants, secondary antioxidants, processing aids, UV stabilizers, anti-blocks, slip agents, tackifiers, fire retardants, anti-microbial agents, odor reducer agents, anti-fungal agents, and combinations thereof. For example, one or more layers of a film disclosed herein may include additives that facilitate forming a stretch wrap such as silage wrap. Exemplary silage wrap additives include polyisobutylene (PIB). One or more layers of a film disclosed herein may include from about 0.01 to about 10 percent by the combined weight of such additives, based on the total weight of the polyethylene-based film.

### E - Films

A film according to the present disclosure is a monolayer film or a multilayer as defined in claim 1.

A multilayer film can include two more or more layers. For example, three layers, four layers, five layers, six layers, seven layers, etc. In some embodiments, a multilayer film can include at least a first layer, a second layer, and a third layer. The second layer is between the first layer and the third layer. The second layer can include a polyethylene polymer component comprising linear low density polyethylene; and a wax component comprising nonpolar, polyethylene wax, wherein the nonpolar, polyethylene wax has a density of 0.955 grams/cm³ or greater, and wherein the nonpolar, polyethylene wax is present in an amount of at least 3 percent by weight of the film. In some embodiments, the first layer can be referred to as the first outer layer, the second layer can be referred to as the core layer, and the third layer can be referred to as the second outer layer. In embodiments herein, the multilayer films may further include one or more intermediate layers positioned between the core layer and at least one outer layer. In some embodiments, the multilayer films may include one or more intermediate layers positioned between the core layer and the first outer layer. In other embodiments, the multilayer films may include one or more intermediate layers positioned between the core layer and the second outer layer. In further embodiments, the multilayer films may include one or more intermediate layers positioned between the core layer and the first outer layer, and between the core layer and the second outer layer. Any layer of a multilayer film may be compositionally the same as or different from the second (or core) layer. The one or more intermediate layers may include ethylene-based polymers, such as, LDPE, LLDPE, MDPE, HDPE, or blends thereof.

For multilayer films having first and second outer layers, the first and second outer layers may be the same or different in composition and/or thickness. For example, a three-layer film may have an ABA film structure, where the A skin layers may be the same or different in thickness, but are symmetrical in the composition, or an ABC film structure, where the A and C may be the same or different in thickness, but the skin layers are unsymmetrical in composition. This type of characterization can be similarly applied to multilayer films having more than three layers (e.g., 5, 7, or more layers).

The thickness ratio of the at least one outer layer to the core layer can be any desirable ratio. In some embodiments, the thickness ratio of the at least one outer layer to the core layer can be any ratio suitable to maintain the oxygen barrier and mechanical properties of a silage wrap film. In some embodiments, the thickness ratio of the at least one outer layer to the core layer may be 1:5 to 1:1, 1:4 to 1:1, 1:3 to 1:1, 1:2 to 1:1, or 1:1.5 to 1:1. The thickness ratio of the at least one outer layer to the core layer can also be captured by percentages. For example, in some embodiments, the core layer comprises from about 50 wt.% to about 95 wt.% of the overall film thickness. In other embodiments, the core layer comprises from about 60 wt.% to about 90 wt.% of the overall film thickness. In further embodiments, the core layer comprises from about 65 wt.% to about 85 wt.% of the overall film thickness.

In further embodiments, where the multilayer film includes a core layer positioned between the first and second outer layers, the thickness ratio of the first and second outer layers to the core layer can be any ratio suitable to maintain the oxygen barrier and mechanical properties of the film. In some embodiments, the thickness ratio of the first and second outer layers to the core layer may be 1:10 to 1:1, 1:5 to 1:1, 1:4 to 1:1, 1:2 to 1:1, or 1:1.5 to 1:1. The thickness ratio of the first and second outer layers to the core layer can also be captured by percentages. For example, in some embodiments, the core layer is from about 50 wt.% to about 95 wt.% of the overall film thickness. In other embodiments, the core layer is from about 60 wt.% to about 90 wt.% of the overall film thickness. In further embodiments, the core layer is from about 65 wt.% to about 85 wt.% of the overall film thickness. These percentages may be similarly applied to multilayer films having more than three layers (e.g., 5, 7, or more layers). The first and second outer layers may have an equal thickness, or alternatively, may have an unequal thickness. The monolayer or multilayer films described herein may have a total film thickness of 100 microns or less. All individual values and subranges are included and disclosed herein. For example, in some embodiments, the monolayer or multilayer films described herein may have a total film thickness of from 10 to 75 microns, from 10 to 50 microns, or from 10 to 30 microns. While there is no minimum thickness contemplated for the monolayer or multilayer films of the present disclosure, practical considerations of current manufacturing equipment suggests that the minimum thickness will be at least 10 microns.

In some embodiments, the monolayer or multilayer films described herein that include a nonpolar, polyethylene wax can have a 100% stretched, oxygen transmission rate (OTR) of at least 10 percent less than the 100% stretched, oxygen transmission rate of the same film without the nonpolar, polyethylene wax.

In some embodiments, the monolayer or multilayer films described herein can have a silage puncture resistance of from 45 (J/cm³) to 200 (J/cm³). All individual values and subranges are included and disclosed herein. For example, in some embodiments, the monolayer or multilayer films described herein may have a silage puncture resistance of from 45 (J/cm³) to 150 (J/cm³), or from 50 (J/cm³) to 100(J/cm³).

In some embodiments, the monolayer or multilayer films described herein can have an Elmendorf Tear Strength CD greater than 500 grams. In some embodiments, the monolayer or multilayer films described herein may have an Elmendorf Tear Strength CD of from greater than 500 grams to 2000 grams. All individual values and subranges are included and disclosed herein. For example, in some embodiments, the monolayer or multilayer films described herein may have an Elmendorf Tear Strength CD of from greater than 500 grams to 1500 grams or from greater than 500 grams to 1000 grams.

### F - How to make films

Films described herein can be made using a variety of techniques including cast film techniques and/or blown film techniques. A method of making blown films is described in U.S. Patent No. 6,521,338 (Maka), the entirety of which patent is incorporated herein by reference. A method of making a cast film is described in U.S. Patent No. 7,847,029 (Butler et al.), the entirety of which patent is incorporated herein by reference. In some embodiments, the monolayer film and/or the multilayer film is a blown film. As used herein, a "blown film" is a film produced by extruding (or coextruding) a polymer melt(s) from an annular die into a tube which is simultaneously pulled away from the die, and over a bubble of air trapped between the die and a collapsing device, such as one or more nip rolls, while the air is blown around the outer film tube surface to stabilize and quench the tube. In a blown film process, contact of the outer film tube surface and optionally also the inner film tube surface with room temperature or cooler air can cool the radially expanding tubular polymer melt as it leaves the die and travels over the trapped bubble thereby causing it to solidify. The point of transition from polymer melt to solid can be referred to as the frost line. Above the frost line, the blown or inflated tube is collapsed and fed through nip rolls which can trap air within the tube to maintain an expanded bubble of fluid (typically air). Optionally, this air bubble may be used to internally cool the expanded film tube by continuously delivering cool air (e.g., at about 45-55°F (7-13°C)) while simultaneously removing warm air from inside the bubble via the die. This exchange of air can be performed at a constant rate to produce a final blown film of uniform size. The internal bubble cooling can assist in quenching the film and may also produce a film having improved optical properties (i.e., lower haze and higher gloss). The blow up ratio is the ratio of the film circumference after radial expansion and cooling to the die opening circumference and may be determined from the known annular die opening dimensions and by measuring the transverse width of the flattened, expanded and cooled tubular film. Blow up ratios can range from 2:1 to 5:1. Dimensions and properties of the blown film may be adjusted by altering the blow up ratio and/or the haul off (or draw) speed of the film as it is pulled out of the die in the machine direction, for example, by driven nip rolls.

One or more layers of a film according to the present disclosure can be a melt blend. As used herein, a "melt blend" (which includes a "melted blend") means two or more layer components (e.g., linear low density polyethylene a nonpolar, polyethylene wax) are melted and blended together via an apparatus such as a compounding apparatus. The melt blend can be directly extruded or cooled to form a solid composition (e.g., pellets) for subsequent use.

In some embodiments, a method of making a film includes providing a melted blend, extruding the melted blend in an extruder to form a tube; and cooling the tube to form a blown stretch film. The melted blend can include a wax component including a melted nonpolar, polyethylene wax as described above and a first polyethylene polymer component including a melted linear low density polyethylene as also described above.

A melted blend as described herein can be provided in a variety of ways. For example, a composition including a dry mixture of a first and second plurality of particles can be melted and blended to form a melted blend, followed by directly extruding the melted blend. The first plurality of particles can include a polyethylene polymer component including linear low density polyethylene; and the second plurality of particles can include a wax component including nonpolar, polyethylene wax, wherein the nonpolar, polyethylene wax has a density of 0.955 grams/cm³ or greater and is present in an amount of at least 3 percent by weight of the melted blend.

Alternatively, the first and second plurality of particles a dry mixture of a first and second plurality of particles can be melted and blended to form a melted blend, followed by forming the melted blend into a composition including a third plurality of particles. The third plurality of particles are a melt blend of the first and second plurality of particles and can be stored, transported, sold, and the like for subsequent extrusion. As used herein, "particles" refer to any kind of plurality of discrete units that are solid at 25°C such as pellets, powder, and the like. In some embodiments, a melt blend of the first and second plurality of particles can form a second layer (e.g., a "core" layer as described above) in a multilayer film where extruding the melted blend in an extruder to form a tube includes co-extruding the melted blend with a second polyethylene polymer component to form a tube including a first layer, a third layer, and the second layer between the first layer and the third layer. The first and third layers include the second polyethylene polymer component, which includes linear low density polyethylene. After extruding, the tube can be cooled to form a multilayer blown, stretch wrap film.

A monolayer film and/or the multilayer film can be subjected to one or more post processing techniques. Nonlimiting examples of post processing techniques include radiation treatment and/or corona treatment. Sealing techniques to which the mono-/multi-layer film can be exposed include heat sealing, adhesive sealing, heat bar sealing, impulse heating, side welding, and/or ultrasonic welding.

Embodiments of the present disclosure include monolayer and/or multilayer films that have not undergone any orientation processes (drawing or stretching) and, thus, are not oriented films (not monoaxially or biaxially oriented films).

### G - How to use films

Monolayer and multilayer films according to the present disclosure can be used as stretch films, especially to contain items so as to limit or prevent their exposure to air (e.g., silage wrap or "silage bale wrap"). A film as described herein may also be useful in silo bags and silo bunker barriers.

Silage bale wrap can be described as a film designed to wrap silage so as to improve the nutritional value of silage (e.g., grass and other vegetable fodder) for cattle. Silage wrap helps baled silage to undergo anaerobic fermentation of the vegetable organic material inside the bale. The fermentation process can increase the amount of protein and make the silage more easily digestible. Silage wrap can facilitate anaerobic fermentation by keeping the oxygen content inside the bale as low as possible. For example, as the fodder is being wrapped with silage wrap, the silage wrap can facilitate pressing air out of the fodder. Further, the oxygen barrier properties of the silage wrap can facilitate keeping air out of the wrapped silage. To help facilitate this, silage wrap can have good mechanical properties, adhesion properties, and oxygen barrier properties. The mechanical properties of silage wrap are desirably good enough to prevent damage to the film from puncturing, stretching, tearing or other mechanical abuse, that could potentially break the film and allow air inside. The adhesion properties between successive layers of film in a bale are desirably good enough to provide a tight and hermetic closing of a bale. The oxygen barrier properties of the film (especially as the film is stretched to wrap silage) are desirably good enough to prevent oxygen in air from going through the layers of film into the bale.

An example of baling silage is described herein below. Silage can be baled by wrapping and stretching a silage wrap film around a bale of a forage crop and forming a barrier around the bale. It is noted that a silage wrap film may stretch up to 80-100% when it is being tightly wrapped around silage by a silage bale wrapping machine. As used herein, a "silage wrap film" is a monolayer film or any multilayer film disclosed herein. The silage wrap film can be wrapped and stretched around the bale to produce a barrier that is composed of one, two, three, four, or more layers of the silage wrap film. Thus, the barrier can be a single layer of the silage wrap film or multiple layers of the silage wrap film. As used herein, a "barrier" is an airtight covering or an airtight encasement that can reduce the permeation of oxygen in air so that the OTR is as described herein.

As used herein, "bale silage" is one or more forage crops formed into a bale and covered with a silage wrap film to help exclude oxygen. A "forage crop" is any plant that is grown and fed to livestock. Nonlimiting examples of forage crops suitable for bale silage include beans, clover, corns, cornstalk, grasses, grains (barley, oats, rice, wheat, rye, millet), hay, legumes (alfalfa, red clover, white clover, alsike clover, birdsfoot trefoil, vetches, sweetclover), sorghums, soybeans, vegetables, and any combination of the foregoing.

A bale of silage can be wrapped using, e.g., a bale wrapping device that wraps and stretches the silage wrap film around the bale to form the barrier. A bale wrapping device can include a loading arm that lifts the bale and places it on a wrapping table. The wrapping table can include rollers and belts which rotate the bale while the table itself revolves. A dispensing device can provide one or more rolls of the silage wrap film. As the bale turns, the silage wrap film can be stretched as it is pulled through the dispensing device and wrapped tightly around the bale to help remove oxygen from the bale. When the table has revolved a predetermined number of times, a lift device can tilt the wrapping table to tip the wrapped bale off of the wrapping table. The dispensing device can cut the silage wrap film prior to the wrapped bale falling from the wrapping table. Operation of the bale wrapping device can be controlled automatically (by way of a computer or similar logic) or manually. In some embodiments, bale wrapping procedures can involve wrapping a bale with about four to about six layers of the silage wrap film to produce bale silage.

Once wrapped, the forage crop can undergo an ensiling process whereby anaerobic microorganisms ferment carbohydrates present in the forage crop to lactic acid forming silage.

An example of silage wrap is also disclosed in US 2011/0185683 (Domenech et al.).

### Test Methods

### Density

The density of the polymers in the polyethylene polymer component is measured according to ASTM D792, Method B.

The density of the nonpolar, polyethylene wax in the wax component is measured according to ISO 1183 at 23°C.

### Melt Index (I₂)

The Melt Index (I₂) is measured according to ASTM D-1238 (condition 190°C/2.16kg).

### Percent Crystallinity

Percent crystallinity for ethylene-based polymers (e.g., LLDPE) is determined by differential scanning calorimetry (DSC), using a TA Instruments Model QlOOO Differential Scanning Calorimeter. A sample of about 5-8 mg size is cut from the material to be tested, and placed directly in the DSC pan for analysis. For higher molecular weight materials, a thin film is normally pressed from the sample, but for some lower molecular weight samples, they may be either too sticky or flow too readily during pressing. Samples for testing may, however, be cut from plaques that are prepared, and used, for density testing. The sample is first heated at a rate of about 10°C/min to 180°C for ethylene- based polymers, and held isothermally for three minutes at that temperature to ensure complete melting (the first heat). Then the sample is cooled at a rate of 10°C per minute to -60°C for ethylene-based polymers, and held there isothermally for three minutes, after which, it is again heated (the second heat) at a rate of 10°C per minute until complete melting. The thermogram from this second heat is referred to as the "second heat curve." Thermograms are plotted as watts/gram versus temperature. The percent crystallinity in the ethylene-based polymers may be calculated using heat of fusion data, generated in the second heat curve (the heat of fusion is normally computed automatically by typical commercial DSC equipment, by integration of the relevant area under the heat curve). The equation for ethylene-based polymers is percent Cryst. = (H_{f} ÷ 292 J/g) x 100; and the equation for propylene-based polymers is:
percent Cryst. = (H_{f} ÷ 165 J/g) x 100. The "percent Cryst." represents the percent crystallinity and "H_{f}" represents the heat of fusion of the polymer in Joules per gram (J/g).

### Acid Value

The acid value (mg KOH/g) of the nonpolar, polyethylene wax in the wax component is measured according to ISO 2114.

### Saponification Value

The saponification value (mg KOH/g) of the nonpolar, polyethylene wax in the wax component is measured according to ISO 3681.

### Viscosity

The viscosity (mPa-s) of the nonpolar, polyethylene wax in the wax component is measured according to DIN53019 at 140°C.

### Drop Point

The drop point (°C) of the nonpolar, polyethylene wax in the wax component is measured according to ASTM D 3954.

### Oxygen Transmission Rate (OTR)

Oxygen transmission rate is reported as (cubic centimeters (cc) of oxygen / (m²*day)) and is measured at 23°C, 75% Relative Humidity, 1 atm using a MOCON Ox-Tran Model 2/21 analyzer in accordance with ASTM D 3985-05. The test specimen is held such that it separates two sides of a test chamber. One side is exposed to a nitrogen atmosphere while the other side is exposed to an oxygen atmosphere. A coulometric sensor monitoring the exit port of the nitrogen side measures the amount of oxygen present. Testing is complete when the concentration of oxygen in the nitrogen side atmosphere is constant. For a 100% stretched sample, the film is first stretched using an Instron tensile machine by stretching the film at 2 inches/minute until the film length is two times its original length. The stretched film is then held on a metallic frame to avoid film relaxation, the film-on-frame subsequently placed in the chamber to measure the oxygen transmission.

### Puncture Resistance

Puncture Resistance is measured in accordance with ASTM D5748-95 using an Instron® testing machine.

### Silage Puncture Resistance

Silage Puncture Resistance as measured in accordance with UNE-EN 14932 using an Instron® testing machine as modified according to UNE-EN 14932.

### Elmendorf Tear Strength Cross Direction (CD)

Elmendorf Tear Strength, CD is measured according to ASTM D 1922-09 using an FX3750 Elmendorf Tester from TEXTEST Instruments. Elmendorf Tear Strength, CD measures the tear strength of a plastic film in the cross (or transversal) direction. Elmendorf Tear Strength, CD can be reported in grams (g).

### Elmendorf Tear Strength MD

Elmendorf Tear Strength, MD measures the tear strength of a plastic film in the machine direction. Elmendorf Tear Strength, MD can be reported in grams (g) and can be measured according to ASTM D1922.

### Examples

### Example 1

Both monolayer films and three-layer films were made in Example 1 using small scale blown film lines.

**Table 1: Process conditions:**

| | |
|---|---|
| Pre-compounding | The melt-blending of polyethylene and wax was done using a BUSS kneader compounder (MDK/E46) |
| Monolayer films | 25µm-thick films were produced using the COLLIN monolayer laboratory blown film line. This is a 30mm diameter extruder with a 25 L/D screw and a die gap used was 1.2 mm. Output was 5 kg/h with a screw speed of 50rpm. BUR=2.5. melt temperature was 239-240°C in all cases. |
| Three-layer films | The three-layer films have been made using the COLLIN co-extrusion Blown Film Line. This line allows for different configuration of layers when running three layer formulations (i.e. 25%/50%/25% or 45%/10%/45% or 20%/60%/20%). The extruders used were 1, 2, and 3. Screw 1 is a 25 mm diameter with a 25 LxD length; screws 2& 3 are 30 mm diameter screws with a 25 LxD length. In all cases the BUR was 2.5, die gap was 1.8 mm and the line output was 8 kg/h. |
| | All films are 25µm thick. Melt temperature ranged from 214-228°C. Screw 1 corresponds to a first outer layer, screw 2 corresponds to the core layer, and screw 3 corresponds to the second outer layer. |

**Table 2: film compositions:**

| **Sample number** | **Structure** | **Layer Ratio** | **Layer composition** |
|---|---|---|---|
| 1CE1 | Monolayer | 100 | 100% DOWLEX 2045S |
| 1CE2 | Monolayer | 100 | 99% DOWLEX 2045S + 1% Licowax 130 |
| 1CE3 | Monolayer | 100 | 90% DOWLEX 2045S + 10% Licowax 520 |
| 1CE4 | Monolayer | 100 | 90% DOWLEX 2045S + 10% Licowax 521 |
| 1CE5 | Three layer | 20/60/20 | All three layers were 100% DOWLEX 2045S |
| 1CE6 | Three layer | 20/60/20 | (ABA) First and second outer layers were DOWLEX 2045S and the core layer was 90% DOWLEX 2045S +10% SASOLWAX HI |
| 1CE7 | Three layer | 20/60/20 | (ABA) First and second outer layers were DOWLEX 2045S and the core layer was 90% DOWLEX 2045S +10% SASOLWAX 4608 |
| 1Ex1 | Monolayer | 100 | 90% DOWLEX 2045S + 10% Licowax 130 |
| 1Ex2 | Monolayer | 100 | 95% DOWLEX 2045S + 5% Licowax 130 |
| 1Ex3 | Three layer | 20/60/20 | (ABA) First and second outer layers were DOWLEX 2045S and the core layer was 90% DOWLEX 2045S +10% Licowax 130 |

**Table 3: relevant properties and variations with respect to the reference film; all monolayer films**

| Monolayer Films | OTR | OTR (100% stretched) | % ΔOTR (un-stretched) | % ΔOTR (100% stretched | Silage puncture resistance | Puncture resistance | Elmendorf Tear Strength CD | Overall % Wax |
|---|---|---|---|---|---|---|---|---|
| *Unit* | *cc*/*(m²* . *day)* | *cc*/*(m².day)* | | | *J*/*cm³* | *J*/*cm³* | *g* | % |
| *1CE1* | 8988 | 7872 | 0 | 0 | 51.7 | 12.6 | 530 | 0 |
| *1CE2* | 8789 | 7818 | -2 | -1 | 51.5 | 11.8 | 551 | 1 |
| *1CE3* | 9285 | 8058 | 3 | 2 | 46.7 | 7.5 | 551 | 10 |
| *1CE4* | 10402 | Not measured | 16 | NM | 55.3 | 10.7 | 588 | 10 |
| *1Ex1* | 6148 | 5935 | -32 | -25 | 46.1 | 7.7 | 580 | 10 |
| *1Ex2* | 7418 | 6956 | -17 | -12 | 46.4 | 9.2 | 534 | 5 |

In the three-layer films (table 4), we see that the film with 10% Licowax 130 in the core layer, which means 6% wax in the total structure, also meets the OTR decrease and the mechanical properties are maintained or improved. In the comparative examples, other PE waxes and paraffin waxes are included but they do not show the desired balance of properties.

**Table 4: three-layer films with structure 20/60/20**

| Three-layer films 20/60/20 | OTR | OTR (100% stretched) | % ΔOTR (un-stretched) | % ΔOTR (100% stretched | Silage puncture resistanc e | Puncture resistance | Elmendorf Tear Strength CD | % thickness of layer w wax | Overa ll % Wax | % wax in the layer that contains wax |
|---|---|---|---|---|---|---|---|---|---|---|
| *Unit* | *cc*/*(m². day)* | *cc*/*(m².day)* | | | *J*/*cm³* | *J*/*cm³* | *g* | % | % | % |
| *1CE5* | 9733 | 7896 | 0 | 0 | 49.1 | 15.7 | 538 | 0 | 0 | 0 |
| *1CE6* | 8306 | 8632 | -15 | 9 | 60.7 | 12.1 | 623 | 60 | 6 | 10 |
| *1CE7* | 8805 | 8663 | -10 | 10 | 60.1 | 10.9 | 713 | 60 | 6 | 10 |
| *1Ex3* | 8081 | 7053 | -17 | -11 | 57.6 | 13.1 | 593 | 60 | 6 | 10 |

### Example 2

Example 2 was carried out using a semi-industrial scale blown extrusion, three-layer line. In this experiment we have used Resin XZ, which is a blend of 90% ELITE AT 6301 and 10% LICOWAX 130. This blend has been melt compounded (total of 2000 kg).

The films are three layer with A/B/C structure, relative thickness of each layer 15%/70%/15% and total thickness of 23 microns. They were fabricated with an ALPINE blown film line, with the following characteristics in Table 5:

**Table 5:**

| | |
|---|---|
| **Main components** | ALPINE inner bubble control |
| | MACRO dual lip cooling ring |
| | DOTECO Profix thickness profile control |
| | KUNDIG capacitive thickness sensor |
| | Tandem winder(contact/surface mode) |
| **Monolayer film screw diameter** | 65 mm |
| **Monolayer screw length** | 30xD |
| **Maximum output (monolayer)** | 80 kg/h |
| **Coex screw diameter (A & C)** | 50 mm |
| **Coex screw length (A & C)** | 30 x D |
| **Coex screw diameter (B)** | 65 mm |
| **Coex screw diameter (B)** | 30xD |
| **Maximum output (coex)** | 220 kg/h (Thin Skin layers preferably around 10-25%) |
| **Die size** | 200 mm |

Specific details of processing conditions are given in Table 6:

**Table 6. Processing conditions of 3-layer films made in the ALPINE blown film line**

| | *2CE1* | *2Ex1* |
|---|---|---|
| | A:ELITE AT 6301 + 15%ATTANE 4100 + 9% PIB / B:ELITE AT 6301 + 9% PIB / C:ELITE AT 6301 + 10% LDPE 150 | A: Resin XZ + 15%ATTANE 4100 + 9% PIB / B:Resin XZ + 9% PIB / C: Resin XZ + 10% LDPE 150 |
| B.U.R. | 2.8:1 | 2.8:1 |
| Die gap (mm) | 2.5 | 2.5 |
| Layer percetaje Extr. A (%) | 15 | 15 |
| Layer percetaje Extr. B (%) | 70 | 70 |
| Layer percetaje Extr. C (%) | 15 | 15 |
| Melt Pressure Extr. A (bar) | 121 | 145 |
| Melt Pressure Extr. B (bar) | 191 | 245 |
| Melt Pressure Extr. C (bar) | 124 | 160 |
| Melt Temperature Extr. A (DegC) | 219 | 218 |
| Melt Temperature Extr. B (DegC) | 219 | 212 |
| Melt Temperature Extr. C (DegC) | 210 | 210 |
| Motor Current Extr. A (A) | 19 | 24 |
| Motor Current Extr. B (A) | 49 | 52 |
| Motor Current Extr. C (A) | 31 | 33 |
| Output Rate (Kg/h) | 80 | 80 |
| Screw Speed Extr. A (rpm) | 23.1 | 23.1 |
| Screw Speed Extr. B (rpm) | 31.9 | 36.7 |
| Screw Speed Extr. C (rpm) | 18.0 | 22.0 |
| Take-off Speed (m/min) | 32.8 | 33.7 |

The composition of each ABC layer and film properties are shown in Table 7 below.

Table 7. Layer composition and properties of films produced in the ALPINE blown film line.

**Table 7**

| | | *2CE1* | *2Ex1* |
|---|---|---|---|
| | | A:ELITE AT 6301 + 15%ATTANE 4100 + 9% PIB / B:ELITE AT 6301 + 9% PIB / C:ELITE AT 6301 + 10% LDPE 150 | A: Resin XZ + 15%ATTANE 4100 + 9% PIB / B:Resin XZ + 9% PIB / C: Resin XZ + 10% LDPE 150 |
| Elmendorf Tear Strength CD | g | 480 | 684 |
| Elmendorf Tear Strength MD | g | 227 | 302 |
| Silage Puncture Force | N | 4.0 | 4.2 |
| Un-stretched OTR | cm³/m².day | 11119 | 8329 |
| Stretched @ 100% OTR | cm³/m².day | 9101 | 5562 |

These structures reflect the ones actually used in the industry, including a tackifier additive (poly-isobutylene, PIB), a cling layer that includes ATTANE® SL4100G ultra-low density polyethylene, ethylene/1-octene copolymer, made in the solution process with Ziegler-Natta catalyst, with 12=1.0 dg/min, density=0.912. LDPE 150 is made with the high pressure process in a tubular reactor and has 12=0.25 dg/min and density = 0.9210 g/cm3.

E1 example shows a lower oxygen transmission rate, for both the un-stretched and stretched film, while mechanical properties are maintained at good levels.

## Claims

1. A film comprising at least one layer, wherein the at least one layer comprises:
a) a polyethylene polymer component comprising linear low density polyethylene; and
b) a wax component comprising nonpolar, polyethylene wax, wherein the nonpolar, polyethylene wax has a density of 0.955 grams/cm³ or greater, and wherein the nonpolar, polyethylene wax is present in an amount from 10 to 30 percent by weight of the film.

2. The film of claim 1, wherein the polymer component comprises a blend of linear low density polyethylene and at least one polyethylene polymer chosen from low density polyethylene, medium density polyethylene, and high density polyethylene.

3. The film of any preceding claim, wherein the nonpolar, polyethylene wax has an acid value of 5 (mg KOH/g) or less as measured in accordance with ISO 2114, and/or wherein the nonpolar, polyethylene wax has a saponification value of 5 (mg KOH/g) or less as measured in accordance with ISO 3681.

4. The film of any preceding claim, wherein the nonpolar, polyethylene wax has a viscosity in the range from 100 to 30,000 (mPa-s) as measured in accordance with DIN53019 at 140°C.

5. The film of any preceding claim, wherein the nonpolar, polyethylene wax has a drop point in the range from 125°C to 145°C as measured in accordance with ASTM D 3954.

6. The film of any preceding claim, wherein the film has a 100% stretched, oxygen transmission rate of at least 10 percent less than the 100% stretched, oxygen transmission rate of the same film without the nonpolar, polyethylene wax as measured in accordance with ASTM D 3985-05.

7. The film of any preceding claim, wherein the film has a silage puncture resistance of 45 (J/cm³) or greater as measured in accordance with UNE-EN 14932.

8. The film of any preceding claim, wherein the film has an Elmendorf Tear Strength Cross Direction greater than 500 grams as measured in accordance with ASTM D 1922-09.

9. The film of any preceding claim, wherein the film is a monolayer film.

10. The film of claim 1, wherein the film is a multilayer film comprising:
a) a first layer;
b) a second layer, wherein the second layer comprises the polyethylene polymer component and the wax component; and
c) a third layer, wherein the second layer is between the first layer and third layer.

11. A composition comprising:
a) a polyethylene polymer component comprising linear low density polyethylene; and
b) a wax component comprising nonpolar, polyethylene wax, wherein the nonpolar, polyethylene wax has a density of 0.955 grams/cm³ or greater, and wherein the nonpolar, polyethylene wax is present in an amount from 10 to 30 percent by weight of the composition.

12. The composition of claim 11, wherein the composition is a plurality of particles.

13. A method of making a film, wherein the method comprises:
a) providing a melted blend, wherein the melted blend comprises a wax component comprising melted nonpolar, polyethylene wax and a first polyethylene polymer component comprising melted linear low density polyethylene, wherein the nonpolar, polyethylene wax has a density of 0.955 grams/cm³ or greater, and wherein the nonpolar, polyethylene wax is present in an amount of from 10 to 30 percent by weight of the film; and
b) forming the melted blend into a film.

14. The method of claim 13, wherein forming the melted blend into a film comprises:
a) extruding the melted blend in an extruder to form a tube; and
b) cooling the tube to form a blown stretch film, wherein, optionally, the melted blend forms a second layer in a multilayer film, and wherein extruding the melted blend in an extruder to form a tube comprises co-extruding the melted blend with a second polyethylene polymer component to form a tube comprising a first layer, a second layer and a third layer, wherein the second layer is between the first layer and the third layer, and wherein the second polyethylene polymer component comprises linear low density polyethylene.

## Patentansprüche

1. Eine Folie, beinhaltend mindestens eine Schicht, wobei die mindestens eine Schicht Folgendes beinhaltet:
a) eine Polyethylenpolymerkomponente, beinhaltend lineares Polyethylen geringer Dichte; und
b) eine Wachskomponente, beinhaltend nichtpolares Polyethylenwachs, wobei das nichtpolare Polyethylenwachs eine Dichte von 0,955 Gramm/cm³ oder mehr aufweist und wobei das nichtpolare Polyethylenwachs in einer Menge von 10 bis 30 Gewichtsprozent der Folie vorhanden ist.

2. Folie gemäß Anspruch 1, wobei die Polymerkomponente eine Mischung aus linearem Polyethylen geringer Dichte und mindestens einem Polyethylenpolymer, ausgewählt aus Polyethylen geringer Dichte, Polyethylen mittlerer Dichte und Polyethylen hoher Dichte, beinhaltet.

3. Folie gemäß einem vorhergehenden Anspruch, wobei das nichtpolare Polyethylenwachs eine Säurezahl von 5 (mg KOH/g) oder weniger, wie in Übereinstimmung mit ISO 2114 gemessen, aufweist und/oder wobei das nichtpolare Polyethylenwachs eine Verseifungszahl von 5 (mg KOH/g) oder weniger, wie in Übereinstimmung mit ISO 3681 gemessen, aufweist.

4. Folie gemäß einem vorhergehenden Anspruch, wobei das nichtpolare Polyethylenwachs eine Viskosität im Bereich von 100 bis 30 000 (mPa-s), wie in Übereinstimmung mit DIN53019 bei 140 °C gemessen, aufweist.

5. Folie gemäß einem vorhergehenden Anspruch, wobei das nichtpolare Polyethylenwachs einen Tropfpunkt im Bereich von 125 °C bis 145 °C, wie in Übereinstimmung mit ASTM D 3954 gemessen, aufweist.

6. Folie gemäß einem vorhergehenden Anspruch, wobei die Folie eine Sauerstoffübertragungsrate bei 100%-igem Stretch von mindestens 10 Prozent weniger als die Sauerstoffübertragungsrate bei 100%-igem Stretch derselben Folie ohne das nichtpolare Polyethylenwachs, wie in Übereinstimmung mit ASTM D 3985-05 gemessen, aufweist.

7. Folie gemäß einem vorhergehenden Anspruch, wobei die Folie eine Silage-Durchstoßfestigkeit von 45 (J/cm³) oder mehr, wie in Übereinstimmung mit UNE-EN 14932 gemessen, aufweist.

8. Folie gemäß einem vorhergehenden Anspruch, wobei die Folie eine Elmendorf-Reißfestigkeit in Querrichtung von mehr als 500 Gramm, wie in Übereinstimmung mit ASTM D 1922-09 gemessen, aufweist.

9. Folie gemäß einem vorhergehenden Anspruch, wobei die Folie eine Einschichtfolie ist.

10. Folie gemäß Anspruch 1, wobei die Folie eine Mehrschichtfolie ist, die Folgendes beinhaltet:
a) eine erste Schicht;
b) eine zweite Schicht, wobei die zweite Schicht die Polyethylenpolymerkomponente und die Wachskomponente beinhaltet; und
c) eine dritte Schicht, wobei sich die zweite Schicht zwischen der ersten Schicht und der dritten Schicht befindet.

11. Eine Zusammensetzung, beinhaltend:
a) eine Polyethylenpolymerkomponente, beinhaltend lineares Polyethylen geringer Dichte; und
b) eine Wachskomponente, beinhaltend nichtpolares Polyethylenwachs, wobei das nichtpolare Polyethylenwachs eine Dichte von 0,955 Gramm/cm³ oder mehr aufweist und wobei das nichtpolare Polyethylenwachs in einer Menge von 10 bis 30 Gewichtsprozent der Zusammensetzung vorliegt.

12. Zusammensetzung gemäß Anspruch 11, wobei die Zusammensetzung eine Vielzahl von Partikeln ist.

13. Ein Verfahren zum Herstellen einer Folie, wobei das Verfahren Folgendes beinhaltet:
a) Bereitstellen einer geschmolzenen Mischung, wobei die geschmolzene Mischung eine Wachskomponente, beinhaltend geschmolzenes nichtpolares Polyethylenwachs, und eine erste Polyethylenpolymerkomponente, beinhaltend geschmolzenes lineares Polyethylen geringer Dichte, beinhaltet, wobei das nichtpolare Polyethylenwachs eine Dichte von 0,955 Gramm/cm³ oder mehr aufweist und wobei das nichtpolare Polyethylenwachs in einer Menge von 10 bis 30 Gewichtsprozent der Folie vorliegt; und
b) Formen der geschmolzenen Mischung zu einer Folie.

14. Verfahren gemäß Anspruch 13, wobei das Formen der geschmolzenes Mischung zu einer Folie Folgendes beinhaltet:
a) Extrudieren der geschmolzenen Mischung in einem Extruder, um einen Schlauch zu formen; und
b) Abkühlen des Schlauchs, um eine geblasene Stretchfolie zu formen, wobei die geschmolzene Mischung wahlweise eine zweite Schicht in einer Mehrschichtfolie formt und wobei das Extrudieren der geschmolzenen Mischung in einem Extruder zum Formen eines Schlauchs das Co-Extrudieren der geschmolzenen Mischung mit einer zweiten Polyethylenpolymerkomponente beinhaltet, um einen Schlauch zu formen, der eine erste Schicht, eine zweite Schicht und eine dritte Schicht beinhaltet, wobei sich die zweite Schicht zwischen der ersten Schicht und der dritten Schicht befindet und wobei die zweite Polyethylenpolymerkomponente lineares Polyethylen geringer Dichte beinhaltet.

## Revendications

1. Un film comprenant au moins une couche, dans lequel l'au moins une couche comprend :
a) un constituant polymère de polyéthylène comprenant du polyéthylène basse densité linéaire ; et
b) un constituant de cire comprenant de la cire non polaire de polyéthylène, dans lequel la cire non polaire de polyéthylène a une masse volumique de 0,955 g/cm³ ou supérieure, et dans lequel la cire non polaire de polyéthylène est présente dans une quantité allant de 10 à 30 pour cent en poids du film.

2. Le film de la revendication 1, dans lequel le constituant polymère comprend un mélange homogène de polyéthylène basse densité linéaire et d'au moins un polymère de polyéthylène choisi parmi du polyéthylène basse densité, du polyéthylène moyenne densité, et du polyéthylène haute densité.

3. Le film de n'importe quelle revendication précédente, dans lequel la cire non polaire de polyéthylène a un indice d'acide de 5 (mg KOH/g) ou inférieur tel que mesuré conformément à la norme ISO 2114, et/ou dans lequel la cire non polaire de polyéthylène a un indice de saponification de 5 (mg KOH/g) ou inférieur tel que mesuré conformément à la norme ISO 3681.

4. Le film de n'importe quelle revendication précédente, dans lequel la cire non polaire de polyéthylène a une viscosité dans la gamme allant de 100 à 30 000 (mPa-s) telle que mesurée conformément à la norme DIN53019 à 140 °C.

5. Le film de n'importe quelle revendication précédente, dans lequel la cire non polaire de polyéthylène a un point de goutte dans la gamme allant de 125 °C à 145 °C tel que mesuré conformément à la norme ASTM D 3954.

6. Le film de n'importe quelle revendication précédente, le film ayant un taux de transmission d'oxygène une fois étiré à 100 % inférieur d'au moins 10 pour cent au taux de transmission d'oxygène une fois étiré à 100 % du même film sans la cire non polaire de polyéthylène tel que mesuré conformément à la norme ASTM D 3985-05.

7. Le film de n'importe quelle revendication précédente, le film ayant une résistance à la perforation d'ensilage de 45 (J/cm³) ou supérieure telle que mesurée conformément à la norme UNE-EN 14932.

8. Le film de n'importe quelle revendication précédente, le film ayant une résistance à la déchirure d'Elmendorf dans le sens transversal supérieure à 500 grammes telle que mesurée conformément à la norme ASTM D 1922-09.

9. Le film de n'importe quelle revendication précédente, le film étant un film monocouche.

10. Le film de la revendication 1, le film étant un film multicouche comprenant :
a) une première couche ;
b) une deuxième couche, dans lequel la deuxième couche comprend le constituant polymère de polyéthylène et le constituant de cire ; et
c) une troisième couche, dans lequel la deuxième couche se trouve entre la première couche et la troisième couche.

11. Une composition comprenant :
a) un constituant polymère de polyéthylène comprenant du polyéthylène basse densité linéaire ; et
b) un constituant de cire comprenant de la cire non polaire de polyéthylène, dans lequel la cire non polaire de polyéthylène a une masse volumique de 0,955 g/cm³ ou supérieure, et dans lequel la cire non polaire de polyéthylène est présente dans une quantité allant de 10 à 30 pour cent en poids de la composition.

12. La composition de la revendication 11, la composition étant une pluralité de particules.

13. Un procédé de fabrication d'un film, le procédé comprenant :
a) la fourniture d'un mélange homogène fondu, dans lequel le mélange homogène fondu comprend un constituant de cire comprenant de la cire non polaire fondue de polyéthylène et un premier constituant polymère de polyéthylène comprenant du polyéthylène basse densité linéaire fondu, dans lequel la cire non polaire de polyéthylène a une masse volumique de 0,955 g/cm³ ou supérieure, et dans lequel la cire non polaire de polyéthylène est présente dans une quantité allant de 10 à 30 pour cent en poids du film ; et
b) la mise en forme du mélange homogène fondu en un film.

14. Le procédé de la revendication 13, dans lequel la mise en forme du mélange homogène fondu en un film comprend :
a) l'extrusion du mélange homogène fondu dans une extrudeuse afin de former un tube ; et
b) le refroidissement du tube afin de former un film étirable soufflé, dans lequel, facultativement, le mélange homogène fondu forme une deuxième couche dans un film multicouche, et dans lequel l'extrusion du mélange homogène fondu dans une extrudeuse afin de former un tube comprend la co-extrusion du mélange homogène fondu avec un deuxième constituant polymère de polyéthylène afin de former un tube comprenant une première couche, une deuxième couche et une troisième couche, dans lequel la deuxième couche se trouve entre la première couche et la troisième couche, et dans lequel le deuxième constituant polymère de polyéthylène comprend du polyéthylène basse densité linéaire.
